# EUROPEAN PATENT SPECIFICATION

(11) **EP 4 048 493 B1**
(45) Date of publication and mention of the grant of the patent: **15.05.2024**
(21) Application number: 20792680.9
(22) Date of filing: 22.10.2020
(51) Int. Cl.: B27K 3/02, B27K 3/15, B27K 5/00, C08L 61/06

(54) **METHOD FOR PREPARATION OF DENSIFIED WOOD ARTICLE**
VERFAHREN ZUR HERSTELLUNG EINES PRESSHOLZARTIKELS
PROCÉDÉ DE PRÉPARATION D'UN ARTICLE EN BOIS DENSIFIÉ

(30) Priority: 22.10.2019 EP 19204677
(43) Date of publication of application: 31.08.2022
(73) Proprietor: Metadynea Austria GmbH, 3500 Krems (AT)
(72) Inventor: KANTNER, Wolfgang, 3900 Schwartzenau (AT); ZICH, Thomas, 4020 Linz (AT); SCHWARZKOPF, Matthew John, 6000 Koper (SI); BURNARD, Michael David, 6000 Koper (SI); MIKULJAN, Marica, 1385 Nova vas (SI); KUTNAR, Andreja, 1291 kofljica (SI)
(74) Representative: Hoyng Rokh Monegier B.V.
(86) International application number: PCT/EP2020/079835
(87) International publication number: WO 2021/078911

(56) References cited:
- EP-A1- 2 657 203
- CN-A- 108 582 377
- A.F. Ang ET AL: "Possibility of Improving the Properties of Mahang Wood (Macaranga sp.) through Phenolic Compreg Technique", Sains Malaysiana, 1 February 2014 (2014-02-01), pages 219-225, XP055679745, Retrieved from the Internet: URL:https://www.researchgate.net/publicati on/260689812_Possibility_of_Improving_the_ Properties_of_Mahang_Wood_Macaranga_sp_thr ough_Phenolic_Compreg_Technique_Kemungkina n_untuk_Meningkatkan_Sifat_Kayu_Mahang_Mac aranga_sp_melalui_Teknik_Compreg_Fenolik [retrieved on 2020-03-25]
- Anonymous: "Density of Various Wood Species", , 25 March 2020 (2020-03-25), XP055679773, Retrieved from the Internet: URL:https://www.engineeringtoolbox.com/woo d-density-d_40.html [retrieved on 2020-03-25]
- David W Green ET AL: "Mechanical Properties of Wood", , 1 January 1999 (1999-01-01), XP055679770, Retrieved from the Internet: URL:https://www.fpl.fs.fed.us/documnts/fpl gtr/fplgtr113/ch04.pdf [retrieved on 2020-03-25]

## Description

### BACKGROUND OF THE INVENTION

### 1. Field of the Invention

The invention relates to a method for preparing a densified wood article comprising impregnating a porous low-density type of wood with an aqueous phenol-formaldehyde resin composition and pressing. The invention also relates to a densified wood article obtainable by the process. The invention further relates to the use of a specific aqueous phenol-formaldehyde resin composition in a method for preparing a densified wood article and to the use of the densified wood article or a part of the densified wood article in high value-added applications.

### 2. Description of the background Art

Already in 1916 methods were disclosed for impregnating wood with chemicals. US1198040 presents a method of impregnating wood with substituted polynitrophenols by pressure or vacuum.

CN108582377A describes a method for densifying wood by a two stage pressure compression treatment without impregnating the wood with a chemical substance. The temperatures are high and pressure times are long such that the wood hemicellulose and lignin are degraded, and the wood is stable.

Haygreen, J. G., and Daniels, D. H. Wood and Fiber 1: 38-53, 1969 title: simultaneous drying and densification of sapwood discloses a process for densifying thin wood planks. The wood is plasticized, by heat, moisture and/or wood swelling resinoids. Treatment can be accomplished by soaking green sapwood in undiluted water-soluble phenol formaldehyde resin. The material is then stored for over 5 days. Samples were end-coated and soaked in undiluted phenol formaldehyde resinoid for 16 and 72 hours. After soaking, the samples were wrapped and stored at room temperature for 120 hours prior to densification. Densification was performed by pressing the wood in a press to the desired thickness and the position maintained until wood was dry. After pressing, the product is conditioned under moderate humidity conditions to the desired final moisture content.

JPH11151703 discloses method of injecting chemicals into compression-moulded wood. The wood heat softened by compressing in a press moulding machine and immobilised, for example by cooling and then injecting chemicals like wood modifiers, flame retardants, insecticides etc. for example by vacuum impregnation.

US4606388 discloses a process for densifying low-density woods. A green solid wood member having a high moisture content is impregnated with anhydrous ammonia to plasticize the wood, then placed in a cyclic press and subjected to a plurality of low-pressure compression cycles at a temperature below 100°C.

WO2004/056542 discloses a method for manufacturing a compressed wood product. The method comprises two compression stages: a first compression stage; a chemical diffusion impregnation/vacuum pressure bath/tank step; a second compression step including chemical infiltration; annealing, cooling and curing. The chemical to be impregnated is a fatty acid.

EP3470189 discloses a method of obtaining an ornamental laminate veneer product. The method comprises impregnating veneer wood layers with an aqueous phenol-formaldehyde resin comprising a dye, providing a glue to each layer, stacking different layers according to the colour requirement to a veneer stack followed by compacting the veneer by hot pressing the entire stack at a high pressure and temperature.

Manoj Kumar Dubey, in a PhD thesis in Forestry at the University of Canterbury, May 2010, describes a process for densifying wood comprising impregnating vegetable oil into wood. The oil heat-treatment of the wood resulted in increased water repellence and reduced hygroscopicity and thus reduced set recovery.

Thermo Hydro Mechanical (THM) processes combining veneer and impregnation with thermosetting resins are currently present on the market. Typically, low-molecular weight resins like phenol formaldehyde are impregnated into the material then partially cured in an over before compression in a heated press up to a density of approximately 1,300 kg/m³. Applications include electric transmission supports (crossarms), storage containers for liquid natural gas (LNG), wear plates for machinery and transportation vehicles, machine pattern moulds, bulletproof barriers, musical instruments, and structural building components.

A.F. Ang ET AL in "Possibility of Improving the Properties of Mahang Wood (Macaranga sp.) through Phenolic Compreg Technique" (Sains Malaysiana, 1 February 2014 (2014-02-01), pages 219-225) describe a process for densifying wood wherein very low density Mahang wood (Macaranga sp.) was impregnated with low solids content (15% w/v) phenol-formaldehyde having molecular weight of 600 gr/mol by pressure impregnation for a duration of 30 minutes to achieve maximum resin loading. The impregnated wood was precured in an oven at 65°C and dried until 10% moisture content and subsequently hot-pressed at 150°C for 30 min to 10 mm thickness in a hot press and subsequently conditioned at RH=65% and 25°C till constant weight. The dimensional stability and mechanical properties of the wood are increased.

Several other wood densification processes have been developed where heat and/or steam combined with mechanical compression are used without resin or other chemicals. Examples of such processes are CaLignum process, moulding or 3D-shaping, wood densification and post treatment in a closed THM system, Viscoelastic Thermal Compression (VTC) for surface densification.

Thus, it is known that the density of wood can be increased by compressing the porous structure under suitable moisture and temperature conditions to improve surface hardness for example for flooring products. After compression, however, the deformed wood material is sensitive to moisture and a high percentage of the deformation is recovered in moist environment, in particular when soaking in water. This recovery phenomenon, termed set-recovery, has been addressed in the prior art in various ways, by modifying the wood after densification.

However, a problem underlying the invention is that the moisture-induced swelling of the densified wood back to the original shape (set-recovery) is still too high. This is a particular problem in monolithic wood slabs used for high value-added applications such as construction beams, furniture and flooring. The high set recovery implies dimensional instability which leads to deformations that are unacceptable in applications where the wood must fit in a construction. Such high-end uses also impose strict and demanding requirements on low chemicals emission. Therefore, in such applications tropical hardwood is still used a lot, which is becoming more and more unacceptable in view of deforestation problem. The set recovery of the prior art densified wood articles is a major obstacle preventing the widespread commercialization of densified wood products.

Therefore, there is still a desire for an improved process for the manufacture of a densified wood product and resulting products that do not have one or more of the abovementioned problems.

### SUMMARY OF THE INVENTION

According to the invention one or more of the mentioned problems have been solved by providing a method for preparing a densified wood article, comprising
i. Providing a wood article, said wood article:
   a) having at least two substantially parallel surface planes having an initial thickness TH1 defined as the distance between the substantially parallel surface planes,
   b) said initial thickness TH1 preferably being at least 5 mm,
   c) is a porous low-density type of wood having a density lower than 700 kg/m³, preferably between 100 and 600, more preferably between 200 and 500 kg/m³,
ii. optionally conditioning the provided wood article for ensuring equilibrium moisture content, preferably at a temperature between 15 and 25 °C and at a relative humidity RH between 55 and 80%, most preferably around 20°C and 65% RH ,
iii. Providing an aqueous phenol-formaldehyde (PF) resin composition, said aqueous phenol-formaldehyde resin composition:
   a) having a 20 - 50 wt.%, preferably 30 - 40 wt.% solids content, wherein wt.% is defined as the dry resin solids weight relative to the total weight of water and resin in the composition,
   b) comprising phenol-formaldehyde resin oligomers having a low weight average molecular weight (Mw), as measured by size exclusion chromatography SEC of 150 - 500 g mol⁻¹,
   c) having a period of infinite water dilutability exceeding 4, preferably 6 weeks storage at 25°C or 8 weeks at 20°C
   d) having a low free monomer content, preferably a free phenol and free formaldehyde content each less than 0.7 wt.%, preferably less than 0.5 wt.% and more preferably having a total free phenol and free formaldehyde content less than 0.7 wt.% relative to the total weight of the PF resin composition,
   e) comprising an alkaline catalyst,
   f) preferably having a pH value of between 7.5 and 11,
iv. vacuum impregnating the wood article with the resin composition,
   ∘ at a pressure Pi below 0.01 bar and for a time ti between 10 and 240 minutes, preferably P is around 0.001 bar and ti is around 60 minutes, preferably at room temperature,
   ∘ whereby the resin content of the wood article after vacuum impregnation is preferably between 25 and 45, more preferably between 30 and 40 % of the weight of the unimpregnated wood article,
v. drying the resulting impregnated wood article,
   ∘ the drying comprising an oven drying step and preferably also a preceding air-drying step,
      - wherein the oven drying step is at a temperature Td between 50 and 80°C, preferably about 60 °C, for a time between 48 and 60 hours, and
      - wherein the optional preceding air-drying step is done for at least 24 hours preferably in ambient air,
vi. performing a thermal hydro mechanical treatment on the dried impregnated wood article to produce the densified wood article, said treatment comprising compressing the dried impregnated wood article in a press at elevated temperature,
   ∘ wherein compression force is applied to the dried impregnated wood article to reduce the thickness to a final thickness TH2 between 25% and 80% of the initial thickness TH1,
   ∘ wherein the temperature of the dried impregnated wood article T_{WA} is raised to cure the impregnated phenol-formaldehyde resin to a Twa between 150 and 200°C, more preferably about 170 °C,
   ∘ cooling the obtained densified wood article,
vii. optionally post-conditioning the densified wood article at ambient conditions, preferably at 20°C and 65 % relative humidity.

The process of the invention results in low- to mid-density wood gaining increased density, hardness, abrasion resistance, and improvement of strength properties and low set recovery. The method of the invention provides a significant use for low density wood types which otherwise are underutilised.

The invention also relates to the densified wood article obtainable by the method. This densified wood article can replace tropical hardwood like ebony in many applications and can be used for flooring, construction beams, furniture and similar applications and as a result of the good impregnation can be processed by machine tooling. The densified wood article has enhanced wood and wood-composite properties related to dimensional stability, colour stability, exterior exposure, acoustics, and resistance against fungi.

In another aspect the invention relates to the use of the specified aqueous phenol-formaldehyde resin composition for impregnation of wood for the manufacture of densified wood articles and to the use of densified wood articles in various high end applications such as furniture, flooring, and construction beams and for machine tooling to shaped articles.

### BRIEF DESCRIPTION OF THE DRAWINGS

Figure 1 shows a schematic representation of the process of the invention,
Figure 2 shows density profiles of the various densified wood samples, showing the density as a function of the depth along the thickness direction of the densified wood samples.
Figure 3 show the set recovery of several densified wood samples as a function of repeated moisture exposure cycles for a control wood sample that has been densified by thermoforming but has not been impregnated with resin and densified wood samples 1 - 4 according to the invention.

### DETAILED DESCRIPTION OF THE INVENTION

As described above the method for preparing a densified wood article, comprises as a first step the providing of a wood article. The wood article can in principle have various shapes but in view of the preferred method of compressing using a hot press, said wood article is a flat shaped article having at least two substantially parallel surface planes and an initial thickness TH1 defined as the distance between the substantially parallel surface planes. The wood article can be a monolithic wood slab but the method according to the invention in principle also works for a laminated wood (veneer).

The initial thickness TH1 is in principle not limited, but for practical purposes is preferably at least 5 mm. Because the invention has proven very suitable for densifying thicker monolithic wood slabs, the thickness TH1 of the wood article, in particular of a monolithic wood slab, is preferably at least 10, 20 or even at least 30 mm. The maximum thickness is in principal not limited but in view of achieving homogeneous impregnation and low set recovery typically less than 300 mm, preferably less than 200 mm and more preferably less than 100 mm.

The wood type is a porous low-density type of wood having a density lower than 700 kg/m³, more preferably between 100 and 600, more preferably between 200 and 500 kg/m³ and preferably is a deciduous or coniferous wood type. Suitable examples of low-density wood are known in the art, typically green woods, sapwoods, poplar, alder, maple, birch, aspen, cypress, pines, spruces are used. It is however an advantage of the method of the invention compared to other impregnation based prior art methods that good results can also obtained with wood that is not extremely porous and has a density more than 300, 400, 450 or or even more than 500 kg/m³ but still preferably less than 700 kg/m³. This allows more flexibility in the choice of starting materials. It is believed that the combination of the resin properties and the high vacuum impregnation method according to the invention results in good penetration also in less porous wood types.

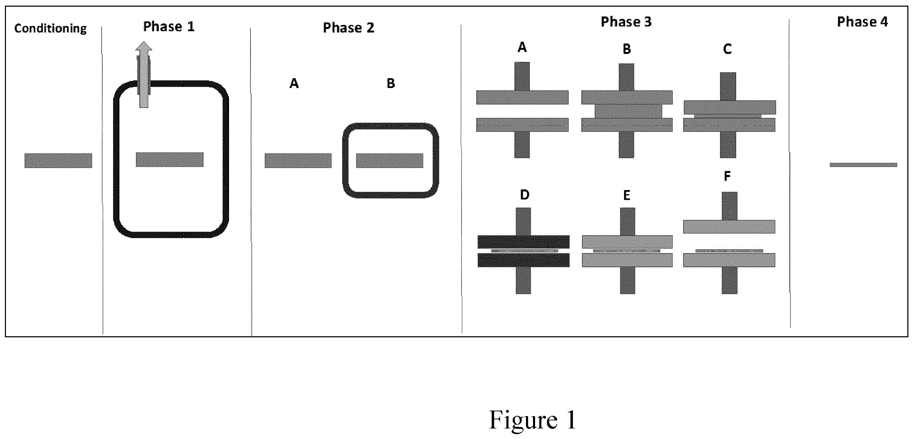

Figure 1 shows a schematic representation of the process of the invention comprising from left to right the step of providing hot platens and conditioning the wood, vacuum impregnating the wood (phase 1), air drying (phase 2A) and oven drying (phase 2B), subsequently in phase 3 from A to F proving a hot press, inserting the wood sample and pressing the wood sample (B and C), heating the platens to a higher temperature (D), cooling the platens (E), removing the pressure, opening the mould to remove the densified wood sample (F), post-conditioning the wood (phase 4).

It was found to be important that before impregnation the provided wood article is moisture conditioned for ensuring equilibrium moisture content. The conditioning step is optional if the wood that is provided already has equilibrium content. The advantage is a better diffusion of the PF resin throughout the wood article in the impregnation step. Without being bound by theory it is believed that this conditioning prevents a too quick absorption of water from the aqueous PF resin composition, which may destabilise the aqueous PF resin composition, may hinder in diffusion of the PF resin throughout the wood article and maybe even cause PF resin precipitation in the surface area. Preferably, the provided wood article is conditioned at a temperature between 15 and 25°C and at a relative humidity RH between 55 and 80%, most preferably around 20°C and 65% RH. If the wood article has the right moisture content the conditioning step can be omitted.

For the impregnation step an aqueous phenol-formaldehyde (PF) resin composition is provided having a 20 - 50 wt.%, preferably 30 - 40 wt.% solids content, wherein wt.% is defined as the dry resin solids weight relative to the total weight of water and resin in the composition. If the resin solids content of the provided resin composition is too high it is more difficult to impregnate into the wood and the resin composition should be diluted with water to 20 - 50 wt.%, preferably 30 - 40 wt.% resin solids content.

The phenol-formaldehyde resin in the aqueous PF resin composition is phenol-formaldehyde oligomer resin having a low weight average molecular weight (Mw), as measured by size exclusion chromatography SEC of 150 - 500 g mol-1. It is believed that the relatively low molecular weight in combination with a relatively high solids content ensures a good impregnation on cellular level and even inside the cells of the wood and provides a high resin loading to achieve low moisture set recovery. On the other hand, despite of the low molecular weight of the resin, the free monomer content is low, preferably the aqueous PF resin composition has a free phenol and free formaldehyde content each less than 0.7 wt.%, preferably less than 0.5 wt.% and more preferably having a total free phenol and free formaldehyde content less than 0.7 wt.% relative to the total weight of the PF resin composition. The aqueous PF resin composition provides good impregnation properties combined with low QESH risk.

It is preferred that the PF resin composition does not comprise urea, urea-derivatives or other formaldehyde scavengers. The amount of urea, urea-derivatives or other formaldehyde scavengers is preferably below 5 wt%, more preferably below 3, even more preferably below 2 wt% relative to the PF resin solids weight in the composition.

Further, it is desired that the aqueous PF resin composition has a period of infinite water dilutability exceeding 4, preferably 6 weeks storage at 25°C or 8 weeks at 20°C. Infinite water dilutability means, as is known in the art, that infinite amount of water can be added without precipitation of the resin. The advantage of infinite water dilutability of the resin composition is not only that it is very stable, but it is also possible to recycle excess resin composition used in the process without risk of destabilising the resin composition with the recycled resin. The high storage stability is expressed as a period of time that the aqueous PF resin composition maintains infinite water dilutability, which preferably is at least 4, preferably 6 weeks storage at 25°C or 8 weeks at 20°C.

A suitable resin composition with the above described features has a viscosity between 50 and 250 mPas, more preferably between 90 and 130, most preferably around 115 mPas (determined at 20°C with viscometer MCR 51 from Anton Paar, with cone CP50-1 and a shear rate of 1/200), but is diluted before impregnation with waterto a solids content between 20 - 50 wt% preferably 30 - 40 wt% by which the viscosity of the resin composition is reduced to a viscosity of approximately between 10 and 100 or between 10 and 50 mPas.

The composition comprises an alkaline catalyst, to catalyse the curing of the resin in the wood product. Preferably, the composition has a pH value of between 7.5 and 11, preferably around 10.

The next step is vacuum impregnating the wood article with the aqueous PF resin composition at a pressure Pi below 0.01 bar and for a time ti between 10 and 240 minutes, preferably P is around 0.001 bar and ti is around 60 minutes. The resin content after impregnation preferably is between 25 % and 45 %, most preferably between 30 % and 40 % of the unimpregnated wood weight. The vacuum impregnation is a known procedure and can be done e.g. by immersing the wood article with the aqueous PF resin composition and then applying vacuum.

It is important that after the impregnation the impregnated wood article is dried to remove at least part of the water. The drying step comprises an oven drying step and more preferably also a preceding air-drying step. The oven drying step is at a temperature Td between 50 and 80°C, preferably about 60 °C, for a time between 48 and 60 hours, and the optional preceding air-drying step is done for at least 24 hours preferably in ambient air, which is inexpensive. It is preferred that some water remains in the wood, to support heat transfer in the wood article during the thermal hydro mechanical (THM) treatment, so drying is preferably done to a remaining water content between 5 and 15, preferably 8 and 12 wt.% relative to the total weight.

The next step is performing a thermal hydro mechanical (THM) treatment on the dried impregnated wood article to produce the densified wood article. Known THM treatment use only heat, water, and mechanical pressure to compress and densify wood. This results in increased density, hardness, abrasion resistance, and improvement to some strength properties. During the THM process, wood is softened by heat and moisture and compressed, resulting in densification without fracturing the wood cell walls, the critical component of wood that provides its mechanical properties. The densified wood will maintain its shape if it is cooled under pressure. However, with this known process the dimensional stability is poor and long processing times of usually several hours are needed. These disadvantages have been overcome in the present invention wherein the THM treatment comprises compressing the dried PF resin impregnated wood article at elevated temperature, wherein compression force is applied to the dried impregnated wood article to reduce the thickness to a final thickness TH2 between 25% and 80% of the initial thickness TH1. The temperature Twa of the dried impregnated wood article is raised to cure the impregnated phenol-formaldehyde resin, to a Twa between 150 and 200°C, more preferably about 170 °C, followed by cooling the obtained densified wood article.

The curing of the PF resin at elevated temperatures is done after compression, but the heating is not necessarily a separate subsequent step as the temperature can also be raised by heating during compressing and some limited pre-curing can occur also during pressing. The densified wood article is maintained in the compressed state until the resin curing has substantially fixed the shape of the densified wood product. It was found that this thermoforming process allows the curing reaction of the resin in the wood to take place in the right time at elevated temperatures to prevent mechanical stress to build up in the wood. The compressing of the dried impregnated wood article in the press at elevated temperature takes a time between 1 and 20 minutes, preferably between 1 and 15 minutes, more preferably between 1 and 10 minutes and most preferably between 1 and 5 minutes. It is a particular advantage of the process of the invention that the heat-pressing step can be so short. After the hot pressing step the densified wood article can be cooled, preferably also maintaining the compressed state. Then the cooled densified wood article can be taken out of the press.

Preferably the obtained the densified wood article is then post-conditioned at ambient conditions, preferably at 20°C and 65 % relative humidity to provide dimensional stability.

The resulting densified wood article has a set recovery, defined as a percentage increase to thickness TH3 after 3 cycles of 24h/20°C water soaking and drying ((TH3-TH2)/TH2x100%), less than 7%, preferably less than 5% and more preferably less than 3 or 2 %.

In a preferred embodiment, in the method according to the invention the thermal hydro mechanical treatment comprises compressing the dried impregnated wood article at elevated temperature between platens of a mechanical press, comprising in
a. Phase a; heating the press platens, to a temperature Tp1 between between 150 and 200, preferably about 170 °C,
b. Phase b; placing the dried impregnated wood article in the press and pressing to the envisaged thickness TH2, with an applied pressure P between 6.5 kPa and 34.0 kPa, preferably between 13.0 kPa and 27.0 kPa, more preferably about 20 kPa,
c. Phase c; when a target thickness TH2 is reached, holding the pressure for a time between 1 - 5 minutes, preferably 2-3 minutes to reduce stresses in the article that could result in spring back and allow curing of the resin,
d. Phase d; increase the platen temperature to a higher temperature Tp2 between 170 and 250 °C, preferably about 200°C and when temperature Tp2 is reached, holding at the temperature Tp2 for a time between 0 and 5 minutes, preferably between 0 and 2 minutes to further reduce stresses in the article and allow further curing of the resin, wherein the temperature of the wood article is raised to a temperature preferably between 200 and 220°C,
e. Phase e; cooling the platens to a temperature Tpe while keeping the densified wood article under pressure, to Tpe between 20 and 80°C preferably between 30 and 70°C and more preferably about 60°C and at a cooling rate Spc of between 5 and 20, preferably about 15 °C/min,
f. Phase f; removing the applied pressure, opening the press and removing the resulting densified wood article.

In another embodiment of the method according to the invention, a relief structure is pressed into one or both surface planes of the densified wood article, preferably by placing a mould having a relief structure between the platens and the dried impregnated wood article or by using press platens having a relief structure.

The invention also relates to a densified wood article obtainable by the process of the above described invention. The densified wood article is a
a) monolithic wood slab impregnated with cured Phenol-formaldehyde resin,
b) having a thickness of at least 5 mm, preferably at least 10 mm and preferably below 100, 60, 40 or 30 mm,
c) having density of at least 800 kg/m³, preferably at least 900 kg/m³ or more preferably at least 1000 kg/m³,
d) having a set recovery after 3 times 24h/20°C water soaking and drying defined as a percentage increase to thickness TH3 ((TH3-TH2)/TH2×100%) of below 7%, preferably of below 5 or even 3%.

Compared to typical set recovery of 60 - 80 % of known THM treated solid wood this invention presents considerable advance beyond the state of the art and offers high commercialization potential.

The set recovery is improved already significantly by reducing the moisture sensitivity of the surface areas by the densification and by the presence of the cured PF resin at the surface where the wood article is exposed to moisture or humidity. However, a much better set-recovery is achieved in the process of the invention because it results in a very good impregnation throughout the thickness of the wood article. Preferably, the densified wood article has a density profile, characterised by a density at 50% of the article thickness Rc of at least 60%, preferably at least 70, 80 or even 90% of the density Rs at the surface of the densified wood article and preferably this is after conditioning at 20°C at 65%RH.

The densified wood article of the invention is further preferably characterised by one or more of the features a) - c);
a) having an elasticity modulus MoE of more than 5, preferably more than 10 GPa,
b) a modulus of rupture MoR of at least 75, preferably at least 100 MPA, MoE and MoR being determined in a three-point bending tests according to DIN 52186,
c) a decay resistance, defined as the mass loss before and after exposing the samples to white rot fungus Trametes versicolor for 10 weeks, of less than 20, preferably less than 15 or even less than 10 or 5%. The method for the determination of these features is described in more detail below.

The invention also relates to the use of an aqueous PF resin composition for impregnating wood in the preparation of a densified wood article, the process of impregnation comprising vacuum impregnating the wood article with the resin composition, at a pressure Pi below 0.01 bar and for a time ti between 10 and 240 minutes, preferably in the method of the invention as described above. The an alkaline catalyst is preferably not mixed into the composition, but is provided as separate part for mixing into the composition shortly before use, to provide a resulting pH value of between 7.5 and 11, preferably around 10. The aqueous PF resin composition comprises the alkaline catalyst shortly before use of the composition. As described the composition preferably does not comprising urea, urea-derivatives or other formaldehyde scavengers because that may result in poorer storage stability of the resin, in poorer resin impregnation and compression properties and poorer properties of the final product.

The low molecular weight PF resin enables densification of thicker wood blocks, preferably having an initial thickness of at least 10, 25 or even more than 50 mm. Penetration of the PF resin composition into the cell walls leads to plasticization of the cell walls and fixation of compressive deformation. Compared to commercialized products, higher degrees of densification (even up to a 300 % increase in density) can be achieved with a small amount of PF resin, typically between 1 and 15 wt.%, preferably between 2 and 10 wt.% more preferably between 3 and 8 wt.% PF resin in the densified wood article.

The PF resin composition must have long enough storage stability to ensure complete impregnation over a time period that is needed for the industrial process. The resin preparation is preferably designed such that the period of infinite water dilutability exceeds 6 weeks storage at 25°C or 8 weeks at 20°C.

The aqueous phenol-formaldehyde resin composition can be prepared in a process comprising
a) Contacting phenol and formaldehyde, preferably in near stoichiometric amounts, wherein stoichiometric amounts means molar amounts of reactive sites of the phenolic ring to formaldehyde molecules, in an aqueous solution, preferably in a total amount of phenol and formaldehyde between 30 and 60 wt.%, preferably about 50 wt.% relative to the total weight of the aqueous solution and,
b) Adding an alkaline catalyst, to provide a pH value of between 7.5 and 11, preferably around 10,
c) Raising the temperature and perform a condensation reaction at a temperature between 40 and 100°C, preferably between 45 and 80°C, more preferably between 60 and 80 °C, most preferably between 65 and 70 °C,
d) stop the condensation reaction by cooling when the water tolerance of the formed phenol-formaldehyde resin composition in an aqueous sodium chloride solution with a concentration of 10% is between 1:10 and 1:30, preferably 1:15 and 1:20.

An advantage of this process, apart from providing an aqueous PF resin composition that is advantageous for impregnation of wood as described above, is that it results in low free formaldehyde and free phenol and thus avoids the necessity to use formaldehyde scavengers in the composition.

The invention thus also relates to the use of the aqueous PF resin composition of the invention according to claim 14 and to the use of the densified wood article or a part of densified wood article of the invention in value-added applications requiring high-strength/stiffness such as furniture, flooring, and construction beams, typically for tropical hardwood replacement, for example a chair, table, pot, crockery, building construction beam, door, skirting board, floor, counter top, stair step, stair balustrade, shelve, closet, cupboard, tools, jewelry.

The densified wood articles can be used as base material in a process for the production of articles comprising wood, for example by shaping by machine tooling a densified monolithic wood slab according to the invention, preferably having a density profile characterised by a density at 50% of the article thickness Rc of at least 80%, preferably at least 90% of the density Rs at the surface of the densified monolithic wood slab.

Thus, the invention has been described by reference to certain embodiments discussed above. It will be recognized that these embodiments are susceptible to various modifications and alternative forms well known to those of skill in the art.

Further modifications in addition to those described above may be made to the structures and techniques described herein without departing from the scope of the invention as defined in the appended claims. Accordingly, although specific embodiments have been described, these are examples only and are not limiting upon the scope of the invention. The invention is further illustrated by the following examples.

### Experimental Methods

### Density

Density of the wood specimens was measured by an immersion method. Density profiles were determined by measuring the density of specimens at various depths, wherein depth is expressed as a percentage of the article thickness.

### Set recovery

Set recovery is defined as a percentage increase in thickness on exposure to moisture. The thickness of the specimens was measured at the start (Tstart), and after soaking (Ts). Multiple cycles of soaking and drying may be performed, such that there are multiple after soaking thicknesses (Ts,1, Ts,2, Ts,3, ..., Ts,n). Set recovery after the n-th cycle is thus defined as [(Ts,n - Tstart)/(Tstart)] x 100%. The wood specimens were soaked in water at 20 °C for 24 hours, after which the thickness increase was measured. Multiple cycles of subsequent drying and soaking were performed. Drying is performed as described above for the drying step.

### Modulus of Elasticity (MoE), Modulus of Rupture (MoR)

The moduli of elasticity and rupture were determined using three-point bending tests. Tests were based on DIN 52186. Specimens were prepared with dimensions of 10 mm (thickness) x 20 mm (width) x 180 mm (length). A span of 150 mm was used to maintain a span to depth ratio of 15. Specimens were tested at a rate of 5 mm/min to achieve failure within 90 sec as prescribed.

### Fungal degradation

Fungal degradation was determined by exposing samples to white rot fungi, Trametes versicolor. Fungal degradation was evaluated based on mass loss after exposure.

A 4.2% potato dextrose agar (PDA) medium was sterilised in an autoclave (A-21 CA Kambič) at 121°C for 20 minutes before being transferred to pre-sterilized petri dishes. The petri dishes were inoculated with Trametes versicolor. After inoculation of fungi, the petri dishes were kept at 26°C in the Kambič growing chamber until the fungi completely colonized media surface.

Wood samples of 20 mm x 20 mm x 9.8 mm were dried at 103°C for 24 hours and weighed. After specimens were sterilized at 134°C for 30 minutes in an autoclave (A-21 CA Kambič), they were placed on the surface of the inoculated test fungi in petri dishes. The specimens were exposed to fungi for 2, 4, 6, 8, and 10 weeks in an incubator chamber at 26°C.

After 2, 4, 6, 8, and 10 weeks of exposure, 10 samples of each group were taken out, cleaned (surface mycelium removed), and dried at 103°C for 24 hours. The mass loss was determined by the difference between the dry weight of each specimen before and after the fungal degradation test.

### Example 1: Preparation of a resin composition

A PF resin was synthesized having a low molecular weight, low monomer content, and long storage stability at ambient temperature. A mixture of phenol, water, an aqueous 50 wt.% formaldehyde solution and an alkaline catalyst was prepared with relative amounts 30 wt.% water, 29.5 wt.% phenol, 22.5 wt.% formaldehyde, 2 wt.% NaOH. A condensation reaction was carried out in a temperature range between 65 and 70 °C, until the tolerance of the resin solution with an aqueous sodium chloride solution with a concentration of 10% was between 1:15 and 1:20. The reaction was stopped by cooling to room temperature.

The finished resin had the following features:
- Solid content (2h/130°C/0.6g): 58.4%,
- Viscosity (20°C): 115 mPas,
- pH-value: 10.3,
- free Formaldehyde: 0.40%,
- free Phenol: 0.31%,
- Water tolerance (20°C) > 1:50,
- Average molecular weight Mw: 486 g/mol,
- Stability at 25°C until water tolerance is not infinite anymore: 47 days.

### Example 2: Preparation of densified wood articles

Aqueous phenol resin solutions with a target solids content were prepared, by mixing the resin composition obtained in Example 1 with water. Target resin solids contents were 30 wt.% and 40 wt.%.

Poplar (Populus sp.) wood specimens were provided with a target initial thickness of 20 mm. The specimens were conditioned at 20°C and 65% relative humidity, followed by vacuum impregnating at 0.001 bar for 60 minutes. After impregnation, the specimens were air dried overnight, followed by drying at 60 °C in an oven for 48 hours or 60 hours.

The samples then underwent THM treatment in a hot press equipped with a water-cooling system (Langzauner Perfect type LZT-UK-30-L). The target thickness was 9.8 mm. The samples entered the press at a platen temperature of 170°C. Mechanical force was applied until target thickness was reached and held for 2 - 3 minutes. Platen temperature was increased to 200 °C, and the samples held for a further 0 - 2 minutes. The platens were then cooled to 60 °C at a rate of 15 °C/min, after which the press was opened, and the samples removed. Samples were then post-conditioned at 20 °C and 65% relative humidity. Control samples were prepared by densifying in the same way specimens that were non-impregnated. Table 1 details the initial thickness TH1 in mm, initial (wet) density D1 in g/cm3, compressed thickness TH2 in mm and compressed density D2 in g/cm3 of the poplar specimens with different Resin solids contents RS and drying time DT in hrs. WG is the weight gain of the unimpregnated wood article in %, which is the weight of the resin impregnated wood after the vacuum impregnation step (iv) and drying step (v) minus the weight of the wood before impregnation as provided (in step i) after conditioning at 20°C and 65% RH (step ii). RU is the phenol-formaldehyde resin uptake after vacuum impregnation in resin wt% relative to the total weight.

**Table 1**

| Sample | RS | DT | TH1 | D1 | TH2 [mm] | D2 | WG | RU |
|---|---|---|---|---|---|---|---|---|
| 1 | 30 | 48 | 20.0 | 0.468 | 9.81 | 1.038 | 46 | 25 |
| 2 | 30 | 60 | 19.9 | 0.364 | 9.89 | 0.858 | 76 | 39 |
| 3 | 40 | 48 | 19.9 | 0.431 | 9.85 | 0.970 | 40 | 27 |
| 4 | 40 | 60 | 19.8 | 0.415 | 9.73 | 0.925 | 40 | 28 |
| Control | - | - | 19.8 | 0.395 | 9.66 | 0.740 | | |

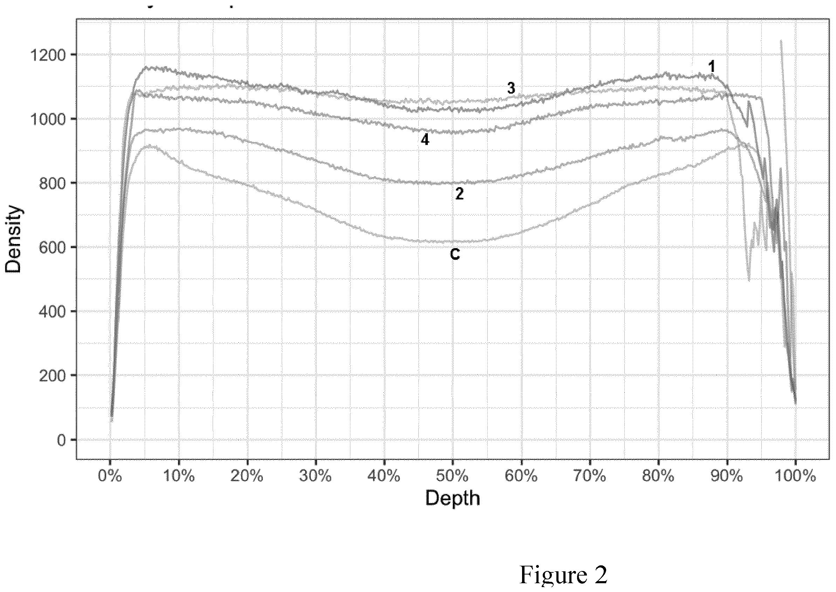

Density profiles of the samples were also determined. These are shown in Figure 2. The numbers conform to the sample numbers, and C to the Control sample. As can be seen, the density in the center of the impregnated samples is higher than of the control sample.

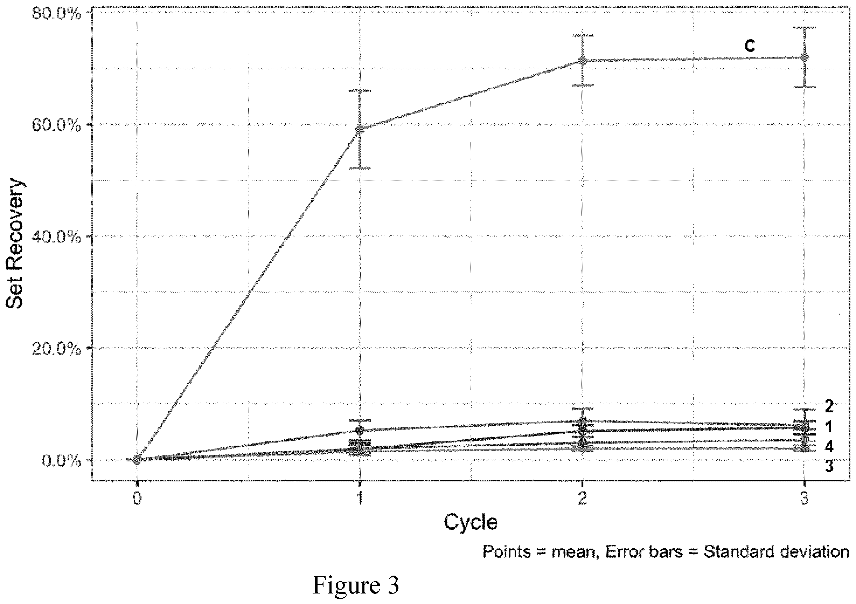

The set recovery of the samples was determined over 3 cycles. These results are shown in Figure 3. The impregnated samples produced much lower set recovery values (between 2 and 5%) than the control (approximately 72%).

The MoE and MoR of the samples were determined. Higher density of THM specimens resulted in higher MoE values (Table 2). The same relations were found for MoR of THM treated specimens. As the densities of the densified specimens are not significantly different, also the MoE values do not significantly differ among the THM treated specimens. However, the specimens D-30-60 (Sample 2) with density lower than other densified specimens had lower MoE and MoR. The same relations were found for MoR of THM treated specimens. The control samples, although having lower density after densification, had comparable MoE and MoR to resin impregnated specimens. SR1 is the Set recovery after the first water soaking /drying cycle [%]. SR3 is the Set recovery after the third water soaking /drying cycle [%].

**Table 2**

| | **MOE [GPa]** | **MOR [MPa]** | **SR1** | **SR3** |
|---|---|---|---|---|
| D-30-48 | 15.2 | 149.5 | 2 | 5.5 |
| D-30-60 | 9.47 | 91.6 | 5 | 5.5 |
| D-40-48 | 13.9 | 130.0 | 1.5 | 2 |
| D-40-60 | 13.8 | 134.0 | 2 | 3 |
| Control undensified wood | 8.1 | 63.4 | | |

### Example 3: Fungal Degradation Test

A sample (No. 5) was provided according to the method as described above, wherein the impregnating resin had a 30% solids content and the sample was oven dried for 72 hours. Two controls were provided: one densified without resin impregnation and an untreated control.

A fungal degradation test was performed on these samples. After 4 weeks of exposure, sample 5 had a mass loss of about 5%. The controls had a moss loss of around 12-13 %. After 6 weeks of exposure, sample 5 had a mass loss of about 5%, the densified control had a mass loss of about 12% and the untreated control had a mass loss of about 15%. The mass loss of the untreated control continued, while the mass loss of sample 5 and the densified control stabilized around 13%.

## Claims

1. Method for preparing a densified wood article, comprising
i. Providing a wood article, said wood article:
a) having at least two substantially parallel surface planes having an initial thickness TH1 defined as the distance between the substantially parallel surface planes,
b) said initial thickness TH1 preferably being at least 5 mm,
c) is a porous low-density type of wood having a density lower than 700 kg/m³, preferably between 100 and 600, more preferably between 200 and 500 kg/m³,
ii. optionally conditioning the provided wood article for ensuring equilibrium moisture content, preferably at a temperature between 15 and 25 °C and at a relative humidity RH between 55 and 80%, most preferably around 20°C and 65% RH ,
iii. Providing an aqueous phenol-formaldehyde (PF) resin composition, said aqueous phenol-formaldehyde resin composition:
a) having a 20 - 50 wt.%, preferably 30 - 40 wt.% solids content, wherein wt.% is defined as the dry resin solids weight relative to the total weight of water and resin in the composition,
b) comprising phenol-formaldehyde resin oligomers having a low weight average molecular weight (Mw), as measured by size exclusion chromatography SEC of 150- 500 g mol⁻¹,
c) having a period of infinite water dilutability exceeding 4, preferably 6 weeks storage at 25°C or 8 weeks at 20°C
d) having a low free monomer content, preferably a free phenol and free formaldehyde content each less than 0.7 wt.%, preferably less than 0.5 wt.% and more preferably having a total free phenol and free formaldehyde content less than 0.7 wt.% relative to the total weight of the PF resin composition,
e) comprising an alkaline catalyst,
f) preferably having a pH value of between 7.5 and 11,
iv. vacuum impregnating the wood article with the resin composition,
∘ at a pressure Pi below 0.01 bar and for a time ti between 10 and 240 minutes, preferably P is around 0.001 bar and ti is around 60 minutes, preferably at room temperature,
∘ whereby the resin content of the wood article after vacuum impregnation is preferably between 25 and 45, more preferably between 30 and 40 % of the weight of the unimpregnated wood article,
v. drying the resulting impregnated wood article,
∘ the drying comprising an oven drying step and preferably also a preceding air-drying step,
• wherein the oven drying step is at a temperature Td between 50 and 80°C, preferably about 60 °C, for a time between 48 and 60 hours, and
• wherein the optional preceding air-drying step is done for at least 24 hours preferably in ambient air,
vi. performing a thermal hydro mechanical treatment on the dried impregnated wood article to produce the densified wood article, said treatment comprising compressing the dried impregnated wood article in a press at elevated temperature,
∘ wherein compression force is applied to the dried impregnated wood article to reduce the thickness to a final thickness TH2 between 25% and 80% of the initial thickness TH1,
∘ wherein the temperature of the dried impregnated wood article T_{WA} is raised to cure the impregnated phenol-formaldehyde resin to a Twa between 150 and 200°C, more preferably about 170 °C,
∘ cooling the obtained densified wood article,
vii. optionally post-conditioning the densified wood article at ambient conditions, preferably at 20°C and 65 % relative humidity.

2. The method according to claim 1, wherein the porous low-density type of wood has a density between 100 and 600, more preferably between 200 and 500 kg/m³.

3. The method according to claim 1 or 2, wherein the porous low-density type of wood has a density lower than 700 kg/m³ and higher than 300, 400, 450 or even 500 kg/m³.

4. The method according to anyone of claims 1 - 3, comprising a conditioning step ii) before the impregnation step for conditioning the provided wood article to equilibrium moisture content, preferably at a temperature between 15 and 25 °C and at a relative humidity RH between 55 and 80%, most preferably around 20°C and 65% RH.

5. The method according to anyone of claims 1 - 4, wherein the PF resin composition comprises a total of less than 5, preferably less than 3 and more preferably less than 2 wt% of urea, urea-derivatives or other formaldehyde scavengers relative to the solid PF resin weight in the composition.

6. The method according to anyone of claims 1-5, wherein the amount of resin composition in the wood article after vacuum impregnation is between 25 % and 45 %, more preferably between 30 % and 40 % by weight of the unimpregnated wood article.

7. The method according to anyone of claims 1 - 6, wherein the impregnated wood article is dried in step v) to a remaining water content of between 5 and 15, preferably between 8 and 12 wt%.

8. The method according to anyone of claims 1 - 7, wherein the compressing of the dried impregnated wood article in a press at elevated temperature is done for a time between 1 and 20 minutes, preferably between 1 and 15 minutes, more preferably between 1 and 10 minutes and most preferably between 1 and 5 minutes.

9. The method according to anyone of claims 1 - 8, wherein the densified wood article obtained in the step thermal hydro mechanical treatment step vi) is cooled in the press whilst maintaining compressed state.

10. The method according to anyone of claims 1 - 9, wherein the thermal hydro mechanical treatment step vi) comprises compressing the dried impregnated wood article at elevated temperature between platens of a mechanical press, comprising in
a. Phase a; heating the press platens to a temperature Tp1 between 150 and 200°C, preferably about 170 °C,
b. Phase b; placing the dried impregnated wood article in the press and pressing to the envisaged thickness TH2, with an applied pressure P between 6.5 kPa and 34.0 kPa, preferably between 13.0 kPa and 27.0 kPa, more preferably about 20 kPa,
c. Phase c; when a target thickness TH2 is reached, holding the pressure for a time between 1-5 minutes, preferably 2-3 minutes,
d. Phase d; increase the platen temperature to a higher temperature Tp2 between 170 and 250 °C, preferably about 200°C and when temperature Tp2 is reached, holding at the temperature Tp2 for a time between 0 and 5 minutes, preferably between 0 and 2 minutes,
e. Phase e; cooling the platens to a temperature Tpe while keeping the densified wood article under pressure, to Tpe between 20 and 80°C, preferably between 30 and 70°C and more preferably about 60°C and at a cooling rate Spc of between 5 and 20, preferably about 15 °C/min,
f. Phase f; removing the applied pressure, opening the press and removing the resulting densified wood article.

11. The method according to anyone of claims 1 - 10, wherein a relief structure is pressed into one or both surface planes of the densified wood article, preferably by placing a mold having a relief structure between the platens and the dried impregnated wood article or by using press platens having a relief structure.

12. A densified wood article obtainable by the process of anyone of claims 1 - 11, wherein the densified wood article is
a) a monolithic wood slab impregnated with cured Phenol-formaldehyde resin,
b) having a thickness of at least 5 mm, preferably at least 10 mm and preferably below 100, 60, 40 or 30 mm,
c) having density of at least 800 kg/m³, preferably at least 900 kg/m³ or more preferably at least 1000 kg/m³,
d) having a set recovery after 3 times 24h/20°C water soaking and drying defined as a percentage increase to thickness TH3 ((TH3-TH2)/TH2x100%) of below 7%, preferably below 5 or even 3% and
e) preferably having a density profile, **characterised by** a density at 50% of the article thickness Rc of at least 60%, preferably at least 70, 80 or even 90% of the density Rs at the surface of the densified wood article and preferably also after conditioning at 20°C at 65%RH.

13. The densified wood article of claims 12, further **characterised by** one or more of the features a) - c);
a) having an elasticity modulus MoE of more than 5, preferably more than 10 GPa,
b) a modulus of rupture MoR of at least 75, preferably at least 100 MPA, MoE and MoR being determined in a three-point bending tests according to DIN 52186,
c) a decay resistance, defined as the mass loss before and after exposing the samples to white rot fungus Trametes versicolor for 10 weeks, of less than 20, preferably less than 15 or even less than 10 or 5%.

14. Use of an aqueous phenol-formaldehyde resin composition in a process for impregnating wood for the manufacture of densified wood articles, which aqueous phenol-formaldehyde resin composition is **characterised by**:
a. having a 20 - 50 wt.%, preferably 30 - 40 wt.% solids content, wherein wt.% is defined as the dry resin solids weight relative to the total weight of water and resin in the composition or a solids content higher than 50wt% for diluting to said solids content range,
b. comprising phenol-formaldehyde resin oligomers having a low weight average molecular weight (Mw), as measured by size exclusion chromatography SEC of 150- 500 g mol⁻¹,
c. having a period of infinite water dilutability exceeding 4, preferably 6 weeks storage at 25°C or 8 weeks at 20°C
d. having a low free monomer content, preferably a free phenol and free formaldehyde content each less than 0.7 wt.%, preferably less than 0.5 wt.% and more preferably having a total free phenol and free formaldehyde content less than 0.7 wt.% relative to the total weight of the PF resin composition,
e. comprising an alkaline catalyst either mixed in the composition or as separate part for mixing into the composition shortly before use, to provide a resulting pH value of between 7.5 and 11, preferably around 10,
f. preferably not comprising urea, urea-derivatives or other formaldehyde scavengers,
which process comprises vacuum impregnating the wood article with the resin composition at a pressure Pi below 0.01 bar and for a time ti between 10 and 240 minutes.

15. Use of the densified wood article or a part of densified wood article of claims 12 -13, in furniture, flooring, and construction beams, preferably a chair, table, pot, crockery, building construction beam, door, skirting board, floor, counter top, stair step, stair balustrade, shelve, closet, cupboard, tools or jewelry or the use of the densified wood article for machine tooling to shape densified wood articles or in tropical hardwood replacement.

## Patentansprüche

1. Verfahren zum Herstellen eines verdichteten Holzartikels, umfassend
i. Bereitstellen eines Holzartikels, wobei der Holzartikel:
a) mindestens zwei im Wesentlichen parallele Oberflächenebenen aufweist, die eine anfängliche Dicke TH1 aufweisen, die als der Abstand zwischen den im Wesentlichen parallelen Oberflächenebenen definiert ist,
b) wobei die anfängliche Dicke TH1 vorzugsweise mindestens 5 mm beträgt,
c) ein poröser Holztyp mit niedriger Dichte ist, der eine Dichte von weniger als 700 kg/m³ aufweist, vorzugsweise zwischen 100 und 600, stärker bevorzugt zwischen 200 und 500 kg/m³,
ii. optional Aufbereiten des bereitgestellten Holzartikels zum Sicherstellen eines Gleichgewichtsfeuchtigkeitsgehalts, vorzugsweise bei einer Temperatur zwischen 15 und 25 °C und bei einer relativen Feuchtigkeit RH zwischen 55 und 80 %, am stärksten bevorzugt etwa 20 °C und 65 % RH,
iii. Bereitstellen einer wässrigen Phenol-Formaldehyd-Harzzusammensetzung, PF-Harzzusammensetzung, wobei die wässrige Phenol-Formaldehyd-Harzzusammensetzung:
a) einen Feststoffgehalt von 20-50 Gew.-%, vorzugsweise 30-40 Gew.-% aufweist, wobei Gew.-% als das Trockenharzfeststoffgewicht definiert ist, relativ zu dem Gesamtgewicht von Wasser und Harz in der Zusammensetzung,
b) umfassend Phenol-Formaldehyd-Harzoligomere, die ein niedriges gewichtsgemitteltes Molekulargewicht (Mw), gemessen durch Größenausschlusschromatographie SEC, von 150-500 g mol⁻¹ aufweisen,
c) eine Periode unendlicher Wasserverdünnbarkeit von mehr als 4, vorzugsweise 6 Wochen Lagerung bei 25 °C oder 8 Wochen bei 20 °C aufweist
d) einen niedrigen freien Monomergehalt, vorzugsweise einen freien Phenol- und freien Formaldehydgehalt aufweist, jeweils weniger als 0,7 Gew.-%, vorzugsweise weniger als 0,5 Gew.-% und stärker bevorzugt einen gesamten freien Phenol- und freien Formaldehydgehalt aufweist, weniger als 0,7 Gew.-%, relativ zu dem Gesamtgewicht der PF-Harzzusammensetzung,
e) umfassend einen alkalischen Katalysator,
f) vorzugsweise einen pH-Wert zwischen 7,5 und 11 aufweist,
iv. Vakuumimprägnieren des Holzartikels mit der Harzzusammensetzung,
∘ bei einem Druck Pi unter 0,01 bar und für eine Zeit ti zwischen 10 und 240 Minuten, vorzugsweise P etwa 0,001 bar ist und ti etwa 60 Minuten ist, vorzugsweise bei Raumtemperatur,
∘ wobei der Harzgehalt des Holzartikels nach der Vakuumimprägnierung vorzugsweise zwischen 25 und 45, stärker bevorzugt zwischen 30 und 40% des Gewichts des nicht imprägnierten Holzartikels ist,
v. Trocknen des resultierenden imprägnierten Holzartikels,
∘ das Trocknen umfassend einen Ofentrocknungsschritt und vorzugsweise ebenso einen vorhergehenden Lufttrocknungsschritt,
• wobei der Ofentrocknungsschritt bei einer Temperatur Td zwischen 50 und 80 °C, vorzugsweise etwa 60 °C, für eine Zeit zwischen 48 und 60 Stunden ist, und
• wobei der optionale vorhergehende Lufttrocknungsschritt mindestens 24 Stunden lang vorzugsweise in Umgebungsluft erfolgt,
vi. Durchführen einer thermischen hydromechanischen Behandlung an dem getrockneten imprägnierten Holzartikel, um den verdichteten Holzartikel herzustellen, die Behandlung umfassend ein Komprimieren des getrockneten imprägnierten Holzartikels in einer Presse bei erhöhter Temperatur,
∘ wobei eine Kompressionskraft auf den getrockneten imprägnierten Holzartikel ausgeübt wird, um die Dicke auf eine Enddicke TH2 zwischen 25 % und 80 % der anfänglichen Dicke TH1 zu reduzieren,
∘ wobei die Temperatur des getrockneten imprägnierten Holzartikels T_{WA} angehoben wird, um das imprägnierte Phenol-Formaldehyd-Harz zu einem Twa zwischen 150 und 200 °C, stärker bevorzugt etwa 170 °C, zu härten,
∘ Abkühlen des erhaltenen verdichteten Holzartikels,
vii. optional Nachaufbereiten des verdichteten Holzartikels bei Umgebungsbedingungen, vorzugsweise bei 20 °C und 65 % relativer Feuchtigkeit.

2. Verfahren nach Anspruch 1, wobei der poröse Holztyp mit niedriger Dichte eine Dichte zwischen 100 und 600, stärker bevorzugt zwischen 200 und 500 kg/m³, aufweist.

3. Verfahren nach Anspruch 1 oder 2, wobei der poröse Holztyp mit niedriger Dichte eine Dichte von weniger als 700 kg/m³ und höher als 300, 400, 450 oder sogar 500 kg/m³ aufweist.

4. Verfahren nach einem der Ansprüche 1 bis 3, umfassend einen Aufbereitungsschritt ii) vor dem Imprägnierungsschritt zum Aufbereiten des bereitgestellten Holzartikels auf den Gleichgewichtsfeuchtigkeitsgehalt, vorzugsweise bei einer Temperatur zwischen 15 und 25 °C und bei einer relativen Feuchtigkeit RH zwischen 55 und 80 %, am stärksten bevorzugt etwa 20 °C und 65 % RH.

5. Verfahren nach einem der Ansprüche 1 bis 4, wobei die PF-Harzzusammensetzung insgesamt weniger als 5, vorzugsweise weniger als 3 und stärker bevorzugt weniger als 2 Gew.-% Harnstoff, Harnstoffderivate oder andere Formaldehydfänger relativ zu dem festen PF-Harzgewicht in der Zusammensetzung umfasst.

6. Verfahren nach einem der Ansprüche 1 bis 5, wobei die Menge von Harzzusammensetzung in dem Holzartikel nach der Vakuumimprägnierung zwischen 25 Gew.-% und 45 Gew.%, stärker bevorzugt zwischen 30 Gew.-% und 40 Gew.-% des nicht imprägnierten Holzartikels beträgt.

7. Verfahren nach einem der Ansprüche 1 bis 6, wobei der imprägnierte Holzartikel in Schritt v) auf einen verbleibenden Wassergehalt zwischen 5 und 15, vorzugsweise zwischen 8 und 12 Gew.-%, getrocknet wird.

8. Verfahren nach einem der Ansprüche 1 bis 7, wobei das Komprimieren des getrockneten imprägnierten Holzartikels in einer Presse bei erhöhter Temperatur für eine Zeit zwischen 1 und 20 Minuten, vorzugsweise zwischen 1 und 15 Minuten, stärker bevorzugt zwischen 1 und 10 Minuten und am stärksten bevorzugt zwischen 1 und 5 Minuten, erfolgt.

9. Verfahren nach einem der Ansprüche 1 bis 8, wobei der verdichtete Holzartikel, der in dem Schritt der thermischen hydromechanischen Behandlung vi) erhalten wird, in der Presse abgekühlt wird, während ein komprimierter Zustand beibehalten wird.

10. Verfahren nach einem der Ansprüche 1 bis 9, wobei der thermische hydromechanische Behandlungsschritt vi) das Komprimieren des getrockneten imprägnierten Holzartikels bei erhöhter Temperatur zwischen Platten einer mechanischen Presse umfasst, umfassend
a. Phase a; Erwärmen der Pressplatten auf eine Temperatur Tp1 zwischen 150 und 200 °C, vorzugsweise etwa 170 °C,
b. Phase b; Platzieren des getrockneten imprägnierten Holzartikels in der Presse und Pressen auf die vorgesehene Dicke TH2 mit einem ausgeübten Druck P zwischen 6,5 kPa und 34,0 kPa, vorzugsweise zwischen 13,0 kPa und 27,0 kPa, stärker bevorzugt etwa 20 kPa,
c. Phase c; wenn eine Zieldicke TH2 erreicht ist, Halten des Drucks für eine Zeit zwischen 1-5 Minuten, vorzugsweise 2-3 Minuten,
d. Phase d; Erhöhen der Plattentemperatur auf eine höhere Temperatur Tp2 zwischen 170 und 250 °C, vorzugsweise etwa 200 °C, und wenn die Temperatur Tp2 erreicht ist, Halten bei der Temperatur Tp2 für eine Zeit zwischen 0 und 5 Minuten, vorzugsweise zwischen 0 und 2 Minuten,
e. Phase e; Abkühlen der Platten auf eine Temperatur Tpe, während der verdichtete Holzartikel unter Druck gehalten wird, auf Tpe zwischen 20 und 80 °C, vorzugsweise zwischen 30 und 70 °C und stärker bevorzugt etwa 60 °C, und bei einer Abkühlrate Spc zwischen 5 und 20, vorzugsweise etwa 15 °C/min,
f. Phase f; Entfernen des ausgeübten Drucks, Öffnen der Presse und Entfernen des resultierenden verdichteten Holzartikels.

11. Verfahren nach einem der Ansprüche 1 bis 10, wobei eine Reliefstruktur in eine oder beide Oberflächenebenen des verdichteten Holzartikels gepresst ist, vorzugsweise durch ein Platzieren einer Form, die eine Reliefstruktur aufweist, zwischen den Platten und dem getrockneten imprägnierten Holzartikel oder durch Verwenden von Pressplatten, die eine Reliefstruktur aufweisen.

12. Verdichteter Holzartikel, erhältlich durch den Prozess nach einem der Ansprüche 1 bis 11, wobei der verdichtete Holzartikel
a) eine monolithische Holztafel ist, die mit gehärtetem Phenol-Formaldehyd-Harz imprägniert ist,
b) eine Dicke von mindestens 5 mm, vorzugsweise mindestens 10 mm und vorzugsweise unter 100, 60, 40 oder 30 mm, aufweist,
c) eine Dichte von mindestens 800 kg/m³, vorzugsweise mindestens 900 kg/m³ oder stärker bevorzugt mindestens 1000 kg/m³ aufweist,
d) eine eingestellte Rückgewinnung nach 3 Mal 24h/20 °C Wassertränken und Trocknen aufweist, definiert als eine prozentuale Erhöhung auf Dicke TH3 ((TH3-TH2)/TH2x100 %) von unter 7 %, vorzugsweise unter 5 oder sogar 3 %, und
e) vorzugsweise ein Dichteprofil aufweist, **gekennzeichnet durch** eine Dichte bei 50 % der Artikeldicke Rc von mindestens 60 %, vorzugsweise mindestens 70, 80 oder sogar 90 % der Dichte Rs an der Oberfläche des verdichteten Holzartikels und vorzugsweise ebenso nach dem Aufbereiten bei 20 °C bei 65 % RH.

13. Verdichteter Holzartikel nach Anspruch 12, ferner **gekennzeichnet durch** eines oder mehrere der Merkmale a)-c);
a) einen Elastizitätsmodul MoE von mehr als 5 aufweisend, vorzugsweise mehr als 10 GPa,
b) einen Bruchmodul MoR von mindestens 75, vorzugsweise mindestens 100 MPA, wobei MoE und MoR in einem Dreipunkt-Biegetests gemäß DIN 52186 bestimmt werden,
c) einen Zerfallwiderstand, definiert als der Masseverlust vor und nach dem Aussetzen der Proben gegenüber weiß-rotem Pilz Trametes versicolor 10 Wochen lang, von weniger als 20, vorzugsweise weniger als 15 oder sogar weniger als 10 oder 5 %.

14. Verwendung einer wässrigen Phenol-Formaldehyd-Harzzusammensetzung in einem Prozess zum Imprägnieren von Holz für die Herstellung verdichteter Holzartikel, wobei die wässrige Phenol-Formaldehyd-Harzzusammensetzung **gekennzeichnet ist durch:**
a. einen Feststoffgehalt von 20-50 Gew.-% aufweisend, vorzugsweise 30-40 Gew.-%, wobei Gew.-% als das Trockenharzfeststoffgewicht relativ zu dem Gesamtgewicht von Wasser und Harz in der Zusammensetzung definiert ist, oder einen Feststoffgehalt von mehr als 50 Gew.-% zum Verdünnen auf den Feststoffgehaltbereich,
b. umfassend Phenol-Formaldehyd-Harzoligomere, die ein niedriges gewichtsgemitteltes Molekulargewicht (Mw), gemessen **durch** Größenausschlusschromatographie SEC von 150-500 g mol⁻¹ aufweisen,
c. eine Periode unendlicher Wasserverdünnbarkeit von mehr als 4, vorzugsweise 6 Wochen Lagerung bei 25 °C oder 8 Wochen bei 20 °C aufweisend
d. einen niedrigen freien Monomergehalt aufweisend, vorzugsweise einem freien Phenol- und freien Formaldehydgehalt, jeweils weniger als 0,7 Gew.-%, vorzugsweise weniger als 0,5 Gew.-% und stärker bevorzugt einen gesamten freien Phenol- und freien Formaldehydgehalt aufweisend, weniger als 0,7 Gew.-%, relativ zu dem Gesamtgewicht der PF-Harzzusammensetzung,
e. umfassend einen alkalischen Katalysator, der entweder in der Zusammensetzung gemischt ist, oder als separater Teil zum Mischen in die Zusammensetzung kurz vor der Verwendung, um einen resultierenden pH-Wert zwischen 7,5 und 11, vorzugsweise etwa 10, bereitzustellen,
f. vorzugsweise nicht umfassend Harnstoff, Harnstoffderivate oder andere Formaldehydfänger,
wobei der Prozess das Vakuumimprägnieren des Holzartikels mit der Harzzusammensetzung bei einem Druck Pi unter 0,01 bar und für eine Zeit ti zwischen 10 und 240 Minuten umfasst.

15. Verwendung des verdichteten Holzartikels oder eines Teils des verdichteten Holzartikels nach den Ansprüchen 12 bis 13, in Möbeln, Bodenbelag und Baubalken, vorzugsweise einem Stuhl, einem Tisch, einem Topf, einem Geschirr, einem Konstruktionsbaubalken, einer Tür, einer Sockelleiste, einem Boden, einer Arbeitsfläche, einer Treppenstufe, einem Treppengeländer, einem Regal, einem Kleiderschrank, einem Schrank, Werkzeugen oder Schmuck oder die Verwendung des verdichteten Holzartikels für maschinelles Bearbeiten, um verdichtete Holzartikel zu formen, oder in Ersatz zu tropischem Hartholz.

## Revendications

1. Procédé permettant de préparer un article en bois densifié, comprenant
i. la fourniture d'un article en bois, ledit article en bois :
a) ayant au moins deux plans de surface sensiblement parallèles ayant une épaisseur initiale TH1 définie comme la distance entre les plans de surface sensiblement parallèles,
b) ladite épaisseur initiale TH1 étant de préférence d'au moins 5 mm,
c) est un type bois de faible densité poreux ayant une masse volumique inférieure à 700 kg/m³, de préférence comprise entre 100 et 600, plus préférablement entre 200 et 500 kg/m³,
ii. facultativement le conditionnement de l'article en bois fourni permettant d'assurer une teneur en humidité d'équilibre, de préférence à une température comprise entre 15 et 25 °C et à une humidité relative RH comprise entre 55 et 80 %, le plus préférablement autour de 20 °C et d'une RH de 65 %,
iii. la fourniture d'une composition aqueuse de résine phénol-formaldéhyde (PF), ladite composition aqueuse de résine phénol-formaldéhyde :
a) ayant une teneur en matières solides de 20 à 50 % en poids, de préférence de 30 à 40 % en poids, le % en poids étant défini comme le poids sec des matières solides de résine par rapport au poids total d'eau et de résine dans la composition,
b) comprenant des oligomères de résine phénol-formaldéhyde ayant un faible poids moléculaire moyen en poids (Mw), tel que mesuré par chromatographie d'exclusion stérique SEC de 150 à 500 g.mol⁻¹,
c) ayant un laps de temps où elle est diluable à l'eau à l'infini dépassant un stockage de 4, de préférence de 6 semaines à 25 °C ou de 8 semaines à 20 °C
d) ayant une faible teneur en monomères libres, de préférence des teneurs en phénol libre et en formaldéhyde libre chacune inférieure à 0,7 % en poids, de préférence inférieure à 0,5 % en poids et plus préférablement ayant une teneur totale en phénol libre et en formaldéhyde libre inférieure à 0,7 % en poids par rapport au poids total de la composition de résine PF,
e) comprenant un catalyseur alcalin,
f) de préférence ayant une valeur de pH comprise entre 7,5 et 11,
iv. l'imprégnation sous vide de l'article en bois avec la composition de résine,
∘ à une pression Pi au-dessous de 0,01 bar et pendant un temps ti compris entre 10 et 240 minutes, de préférence P est autour de 0,001 bar et ti est autour de 60 minutes, de préférence à température ambiante,
∘ moyennant quoi la teneur en résine de l'article en bois après imprégnation sous vide est de préférence comprise entre 25 et 45, plus préférablement entre 30 et 40 % du poids de l'article en bois non imprégné,
v. le séchage de l'article en bois imprégné résultant,
∘ le séchage comprenant une étape de séchage en étuve et de préférence également une étape de séchage à l'air précédente,
• l'étape de séchage en étuve étant à une température Td comprise entre 50 et 80 °C, de préférence d'environ 60 °C, pendant un temps compris entre 48 et 60 heures, et
• l'étape de séchage à l'air précédente facultative étant effectuée pendant au moins 24 heures de préférence dans l'air ambiant,
vi. la réalisation d'un traitement hydromécanique thermique sur l'article en bois imprégné séché pour produire l'article en bois densifié, ledit traitement comprenant la compression de l'article en bois imprégné séché dans une presse à une température élevée,
∘ la force de compression étant appliquée à l'article en bois imprégné séché pour réduire l'épaisseur jusqu'à une épaisseur finale TH2 comprise entre 25 % et 80 % de l'épaisseur initiale TH1,
∘ la température de l'article en bois imprégné séché T_{WA} étant montée pour faire durcir la résine phénol-formaldéhyde imprégnée jusqu'à une Twa comprise entre 150 et 200 °C, plus préférablement d'environ 170 °C,
∘ le refroidissement de l'article en bois densifié obtenu,
vii. facultativement le post-conditionnement de l'article en bois densifié dans des conditions ambiantes, de préférence à 20 °C et une humidité relative de 65 %.

2. Procédé selon la revendication 1, dans lequel le type de bois de faible densité poreux a une masse volumique comprise entre 100 et 600, plus préférablement entre 200 et 500 kg/m³.

3. Procédé selon la revendication 1 ou 2, dans lequel le type de bois de faible densité poreux a une masse volumique inférieure à 700 kg/m³ et supérieure à 300, 400, 450 ou même 500 kg/m³.

4. Procédé selon l'une quelconque des revendications 1 à 3, comprenant une étape de conditionnement ii) avant l'étape d'imprégnation permettant de conditionner l'article en bois fourni jusqu'à une teneur en humidité d'équilibre, de préférence à une température comprise entre 15 et 25 °C et à une humidité relative RH comprise entre 55 et 80 %, le plus préférablement autour de 20 °C et d'une RH de 65 %.

5. Procédé selon l'une quelconque des revendications 1 à 4, dans lequel la composition de résine PF comprend un total inférieur à 5, de préférence inférieur à 3 et plus préférablement inférieur à 2 % en poids d'urée, de dérivés d'urée ou d'autres piégeurs de formaldéhyde par rapport au poids de résine PF solide dans la composition.

6. Procédé selon l'une quelconque des revendications 1 à 5, dans lequel la quantité de composition de résine dans l'article en bois après imprégnation sous vide est comprise entre 25 % et 45 %, plus préférablement entre 30 % et 40 % en poids de l'article en bois non imprégné.

7. Procédé selon l'une quelconque des revendications 1 à 6, dans lequel l'article en bois imprégné est séché dans l'étape v) jusqu'à une teneur en eau restante comprise entre 5 et 15, de préférence entre 8 et 12 % en poids.

8. Procédé selon l'une quelconque des revendications 1 à 7, dans lequel la compression de l'article en bois imprégné séché dans une presse à une température élevée est effectuée pendant un temps compris entre 1 et 20 minutes, de préférence entre 1 et 15 minutes, plus préférablement entre 1 et 10 minutes et le plus préférablement entre 1 et 5 minutes.

9. Procédé selon l'une quelconque des revendications 1 à 8, dans lequel l'article en bois densifié obtenu dans l'étape de traitement hydromécanique thermique vi) est refroidi dans la presse tandis que l'état comprimé est maintenu.

10. Procédé selon l'une quelconque des revendications 1 à 9, dans lequel l'étape de traitement hydromécanique thermique vi) comprend la compression de l'article en bois imprégné séché à une température élevée entre des plateaux d'une presse mécanique, comprenant dans
a. une phase a ; le chauffage des plateaux de la presse jusqu'à une température Tp 1 comprise entre 150 et 200 °C, de préférence d'environ 170 °C,
b. une phase b ; la disposition de l'article en bois imprégné séché dans la presse et le pressage jusqu'à l'épaisseur TH2 prévue, avec une pression appliquée P comprise entre 6,5 kPa et 34,0 kPa, de préférence entre 13,0 kPa et 27,0 kPa, plus préférablement d'environ 20 kPa,
c. une phase c ; lorsqu'une épaisseur TH2 cible est atteinte, la conservation de la pression pendant un temps compris entre 1 et 5 minutes, de préférence entre 2 et 3 minutes,
d. une phase d ; augmenter la température des plateaux jusqu'à une température supérieure Tp2 comprise entre 170 et 250 °C, de préférence d'environ 200 °C et lorsque la température Tp2 est atteinte, la conservation à la température Tp2 pendant un temps compris entre 0 et 5 minutes, de préférence entre 0 et 2 minutes,
e. une phase e ; le refroidissement des plateaux jusqu'à une température Tpe tandis que l'article en bois densifié est gardé sous pression, jusqu'à une Tpe comprise entre 20 et 80 °C, de préférence entre 30 et 70 °C et plus préférablement d'environ 60 °C et à une vitesse de refroidissement Spc comprise entre 5 et 20, de préférence d'environ 15 °C/min,
f. une phase f ; le retrait de la pression appliquée, l'ouverture de la presse et le retrait de l'article de bois densifié résultant.

11. Procédé selon l'une quelconque des revendications 1 à 10, dans lequel une structure en relief est pressée dans l'un des plans de surface ou les deux de l'article en bois densifié, de préférence par la disposition d'un moule ayant une structure en relief entre les plateaux et l'article en bois imprégné séché ou par l'utilisation de plateaux de presse ayant une structure en relief.

12. Article en bois densifié pouvant être obtenu par le procédé selon l'une quelconque des revendications 1 à 11, l'article en bois densifié étant
a) une plaque de bois monolithique imprégnée de résine phénol-formaldéhyde durcie,
b) ayant une épaisseur d'au moins 5 mm, de préférence d'au moins 10 mm et de préférence au-dessous de 100, 60, 40 ou 30 mm,
c) ayant une masse volumique d'au moins 800 kg/m³, de préférence d'au moins 900 kg/m³ ou plus préférablement d'au moins 1000 kg/m³,
d) ayant une récupération rémanente après trempage dans de l'eau de 24 h/à 20 °C à 3 reprises et séchage définie comme un pourcentage d'augmentation jusqu'à l'épaisseur TH3 ((TH3 - TH2)/TH2 x 100 %) au-dessous de 7 %, de préférence au-dessous de 5 ou même de 3 % et
e) de préférence ayant un profil de densité, **caractérisé par** une densité à 50 % de l'épaisseur de l'article Rc d'au moins 60 %, de préférence d'au moins 70, 80 ou même 90 % de la densité Rs à la surface de l'article en bois densifié et de préférence également après conditionnement à 20 °C à une RH de 65 %.

13. Article en bois densifié selon la revendication 12, en outre **caractérisé par** une ou plusieurs des caractéristiques a) à c) ;
a) ayant un module d'élasticité MoE de plus de 5, de préférence plus de 10 GPa,
b) un module de rupture MoR d'au moins 75, de préférence d'au moins 100 MPa, le MoE et le MoR étant déterminés dans des tests de flexion en trois points selon la norme DIN 52186,
c) une résistance à la décomposition, définie comme la perte de masse avant et après exposition des échantillons au champignon de pourriture blanche *Trametes versicolor* pendant 10 semaines, inférieure à 20, de préférence inférieure à 15 ou même inférieure à 10 ou 5 %.

14. Utilisation d'une composition aqueuse de résine phénol-formaldéhyde dans un procédé pour l'imprégnation de bois pour la fabrication d'articles en bois densifié, laquelle composition aqueuse de résine phénol-formaldéhyde est **caractérisée par** :
a. le fait d'avoir une teneur en matières solides de 20 à 50 % en poids, de préférence de 30 à 40 % en poids, le % en poids étant défini comme le poids sec des matières solides de résine par rapport au poids total d'eau et de résine dans la composition ou une teneur en matières solides supérieure à 50 % en poids pour dilution jusqu'à ladite plage de teneur en matières solides,
b. le fait de comprendre des oligomères de résine phénol-formaldéhyde ayant un faible poids moléculaire moyen en poids (Mw), tel que mesuré par chromatographie d'exclusion stérique SEC de 150 à 500 g.mol⁻¹,
c. le fait d'avoir un laps de temps où elle est diluable à l'eau à l'infini dépassant un stockage de 4, de préférence de 6 semaines à 25 °C ou de 8 semaines à 20 °C
d. le fait d'avoir une faible teneur en monomères libres, de préférence des teneurs en phénol libre et en formaldéhyde libre chacune inférieure à 0,7 % en poids, de préférence inférieure à 0,5 % en poids et plus préférablement le fait d'avoir une teneur totale en phénol libre et en formaldéhyde libre inférieure à 0,7 % en poids par rapport au poids total de la composition de résine PF,
e. le fait de comprendre un catalyseur alcalin soit mélangé dans la composition soit sous forme de partie séparée pour mélange dans la composition peu de temps avant utilisation, pour fournir une valeur de pH résultante comprise entre 7,5 et 11, de préférence autour de 10,
f. de préférence le fait de ne pas comprendre d'urée, de dérivés d'urée ou d'autres piégeurs de formaldéhyde,
lequel procédé comprend l'imprégnation sous vide de l'article en bois avec la composition de résine à une pression Pi au-dessous de 0,01 bar et pendant un temps ti compris entre 10 et 240 minutes.

15. Utilisation de l'article en bois densifié ou d'une partie d'article en bois densifié selon les revendications 12 à 13, dans des meubles, des revêtements de sol, et des poutres de construction, de préférence une chaise, une table, un pot, de la vaisselle, une poutre de construction de bâtiment, une porte, une plinthe, un plancher, un plan de travail, une marche d'escalier, un rampe d'escalier, un rayonnage, un placard, une armoire, des outils ou un bijou ou utilisation de l'article en bois densifié pour l'usinage à la machine pour mettre en forme des articles en bois densifiés ou en remplacement de bois de feuillus tropicaux.
